(19) Europäisches Patentamt
European Patent Office
Office européen des brevets

(11) **EP 4 704 283 A1**

(12) **EUROPEAN PATENT APPLICATION**

(43) Date of publication:
**04.03.2026 Bulletin 2026/10**

(21) Application number: **24196991.4**

(22) Date of filing: **28.08.2024**

(51) International Patent Classification (IPC):
*H02J 3/00* (2026.01)   *C25B 1/04* (2021.01)
*C25B 1/02* (2006.01)   *H02J 3/14* (2026.01)
*C25B 15/02* (2021.01)

(52) Cooperative Patent Classification (CPC):
**H02J 3/001; C25B 1/04; C25B 15/02; H02J 3/14**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Energy Global GmbH & Co.
KG
81739 München (DE)**

(72) Inventors:
• **Schumann, Sven
91452 Wilhermsdorf (DE)**
• **Wall, Dirk
45475 Mülheim (DE)**
• **Loku, Fisnik
90439 Nürnberg (DE)**
• **Bendig, Marvin
90513 Zirndorf (DE)**
• **Langenberg, Nils
90461 Nürnberg (DE)**

(54) **AN ELECTROLYSIS SYSTEM, A METHOD FOR OPERATING AN ELECTROLYSIS SYSTEM, A COMPUTER PROGRAM, A COMPUTER-READABLE STORAGE MEDIUM, A CONTROLLER AND AN ELECTRICAL POWER SYSTEM**

(57)     The present invention relates to an electrolysis system (1) comprising an electrolyzer (3) and an electrolyzer power supply system (2) that is adapted to receive an electrical power input (6, 8) for the electrolyzer (3) from an electrical network (7) and a controller that is adapted to detect a fault event of the electrical network (7) when an network voltage (9) of the electrical network (7) leaves a tolerance band (10) around a reference network voltage (11) of the electrical network (7), wherein the controller is further adapted to allow or tolerate a violation of an operational threshold by an operating parameter of the electrolysis system (1) for a predetermined duration when the network voltage (9) is outside the tolerance band (10) and within a stability range (12) from the reference network voltage (11).

Fig. 1

**Description**

Technical Field

The present invention relates to an electrolysis system, a method for operating an electrolysis system, a computer program, a computer-readable storage medium, a controller and an electrical power system comprising said electrolysis system and/or said controller.

Technological Background

Current electrolysis systems consist mainly of a transformer unit, rectifier units operating in parallel, and the electrolysis module rows connected to the direct current side of the rectifiers. Connecting large electrolysis systems to the public electrical network requires compliance with local network code requirements. Part of these requirements, especially for large electrolysis systems, is fault ride through capability. The typical core requirement is to remain fully connected to the electrical network in the event of a temporary voltage dip in the electrical network. Longer or deeper voltage dips allow the electrolysis system to be disconnected. Similar requirements apply to transient voltage spikes. Meeting this requirement is a challenge for the electrolysis system and its converter systems.

Important for the grid operator is the availability of an electrical load after the fault has been cleared, the so-called post-fault recovery behavior. If a large electrolysis system were to shut down in the event of a short-term disturbance in the electrical network, the network operator would have difficulty balancing the power inside his network after the disturbance has been cleared. Therefore, only a certain amount of the electrical load consuming electrical power from the electrical network is allowed to be disconnected from the electrical grid and it is furthermore essential for network stability that large electrical loads remain connected if the allowed operational voltage band from a reference voltage is violated.

Summary of the invention

It is thus an object of the present invention to provide an improved electrolysis system and an improved method for operating the electrolysis system that particularly improves the network stability.

A solution is provided by the subject matter according to the independent claims. Advantageous additional embodiments of the invention are described by the dependent claims, the following description and the figures.

The invention relates to an electrolysis system comprising an electrolyzer power supply system and an electrolyzer, wherein the electrolyzer power supply system comprises at least one transformer unit and a converter and is adapted to receive an alternating current electrical power input from an electrical network and to convert the alternating current electrical power input into a direct current electrical power input for the electrolyzer, which is adapted to convert the direct current electrical power input into an energy carrier, further comprising a controller, particularly an electrolyzer power supply system controller and/or an electrolyzer controller, that is adapted to detect a fault event of the electrical network when a network voltage of the electrical network leaves a tolerance band (10) around a reference network voltage of the electrical network.

According to the invention, the controller is adapted to allow a violation of an operational threshold by an operating parameter, particularly of the electrolyzer power supply system and/or of the electrolyzer, for a predetermined duration when the network voltage is outside the tolerance band and within a stability range from the reference network voltage.

In other words, the converter may be adapted to tolerate or ignore a violation of the operational threshold by the operating parameter. Tolerating and/or allowing may comprise detecting or ignoring the violation of the operational threshold by the operating parameter. Additionally, or alternatively, tolerating and/or allowing may comprise blocking and/or delaying an action that may be triggered by the violation of the operating parameter. The delay of the action may be at least partly for the predetermined duration. For example, a time constant of a control loop may be delayed. The predetermined duration may correspond to a maximum duration of the violation by the operating parameter, when the network voltage has got a value of reference value plus or minus the stability range such that a component of the electrolysis system may not be damaged.

The operating parameter may be of the electrolysis system or any component thereof, particularly of the electrolyzer power supply system and/or of the electrolyzer and/or of an auxiliary system.

The tolerance band around the reference network voltage may be an interval of the operating parameter, wherein no action of the electrolysis system may take place. For example, the tolerance band may have an interval between 85% to 115% or 90% to 110% of the reference network voltage, wherein optionally the edge values of the respective interval may be included. The stability range from the reference network voltage may be larger than the tolerance band. When the network voltage leaves the stability range, the electrolysis system may shut down. The stability range may be limited by a low voltage fault ride through and/or a high voltage fault ride through voltage characteristic.

The electrolyzer power supply system may be adapted to receive the alternating current electrical power input from an electrical network, particularly via a point of connection, and to convert the alternating current electrical power input into the direct current electrical power input for the electrolyzer and additionally be adapted to provide the electrical power input to the electrolyzer. Here, the converter may be adapted to convert the alternating current electrical power input into the direct current electrical power input for the electrolyzer and optionally to drop and/or boost a direct voltage of the direct current electrical power input. The electrolyzer may be adapted to produce an energy carrier, such as hydrogen, using the electrical power input. The electrical network may be adapted to electrically connect a plurality of electrical power sources to a plurality of electrical loads such as the electrolysis system in a network operation mode. Alternatively, the electrical network may comprise an electrical connection between an electrical power source and the electrolysis system in an island operation mode.

This provides the technical effect that the electrolysis system can continue to operate as an electrical load when the network voltage fluctuates and leaves the tolerance band. Those violations of the operational threshold by the operating parameter are allowable as they remain in a predictable range. By this, the electrolysis system may contribute to a stability of the electrical network.

The electrolyzer power supply system also includes embodiments by which additional advantages are obtained.

In one embodiment, the controller is adapted to detect the fault event of the electrical network when a rate of change of the network voltage and a rate of change of a network current received by the electrolyzer power supply system from the electrical network via a point of connection of the electrolyzer power supply system to the electrical network both have a same direction and/or when a rate of change of the network voltage and a rate of change of the network current transmitted to the electrical network via the point of connection both have a different direction, particularly in at least two current carrying phases of the point of connection, and/or the controller is adapted to detect an internal fault when the rate of change of the network voltage and the rate of change of the network current received by the electrolyzer power supply system from the electrical network both have a different direction, particularly in the at least two current carrying phases of the point of connection.

In other words, the controller may be adapted to measure, particularly at the point of connection, and compare the sign (direction) of the respective rate of change $\frac{dU}{dt}$ and $\frac{dI}{dt}$ and determine the fault event of the electrical grid if $\frac{dU}{dt} < 0$ and $\frac{dI}{dt} < 0$ or $\frac{dU}{dt} > 0$ and $\frac{dI}{dt} > 0$, particularly when the electrolysis system may operate as an electrical load. Here, the respective sign may indicate the direction of the respective rate of change.

Here, **U** may denote the network voltage and **I** may denote the network current which may be received by the electrolysis system from the electrical network.

Additionally, or alternatively, the controller may be adapted to determine an internal fault of the electrolysis system if $\frac{dU}{dt} < 0$ and $\frac{dI}{dt} > 0$, particularly when the electrolysis system may operate as an electrical load.

Additionally, or alternatively, the controller of an electrical power source may be adapted to determine the fault event of the electrical grid if $\frac{dU}{dt} < 0$ and $\frac{dI}{dt} > 0$, particularly when the electrolysis system may operate as an electrical power source due to a surplus of a plant-internal power generation.

Additionally, the controller may be adapted to determine the sign of $\frac{dU}{dt}$ and $\frac{dI}{dt}$ in at least two current carrying phases of a multi-phase system such as a three-phase system, wherein the current carrying phases electrically connect the electrolysis system to the electrical network. Thus, when the fault event of the electrical network 7 or the internal fault event of the electrolysis system 1 is respectively determined in at least two current carrying phases, the fault event of the electrical network 7 or the internal fault event of the electrolysis system 1 may be determined for the multi-phase system as a whole.

This provides the advantage that the fault event of the electrical network may be detected quickly and reliably and may further be distinguished from an internal fault.

In one embodiment, the transformer unit optionally comprises an on-load tap changer and the controller is adapted to change a switching state of the on-load tap changer and/or the controller is adapted to alter a conversion rate of the converter for adjusting the direct current electrical power input of the electrolyzer corresponding to the network voltage of the electrical network when the network voltage is outside the tolerance band and within the stability range from the reference network voltage, particularly longer than the predetermined duration.

In other words, the controller may be adapted to increase or decrease an alternating voltage on an alternating current side of the converter by changing the switching state of the on-load tap changer corresponding to the network voltage, particularly when the network voltage is inside the tolerance band or inside the stability range and outside of the tolerance band. For example, if the network voltage drops, the controller may be adapted to increase the alternating voltage and vice versa.

Additionally, or alternatively, the controller may be adapted to increase or decrease a boost factor or a reduction factor of the converter corresponding to the network voltage, particularly when the network voltage is inside the tolerance band or inside the stability range and outside of the tolerance band. For example, if the network voltage drops, the controller may be adapted to increase the boost factor of the converter and vice versa.

Additionally, the controller may be adapted to change the switching stage of the on-load tap changer and/or the conversion rate of the converter in at least a millisecond range.

This provides the advantage that a direct voltage of the direct current electrical power input for the electrolyzer may be kept constant when the network voltage changes, particularly within the tolerance band or outside the tolerance band and inside the stability range.

In one embodiment, the transformer unit or any other upstream transformer unit between the electrolysis system and the electrical network comprises the on-load tap changer and the controller is adapted to temporarily prevent a switching of the on-load tap changer for the duration of the fault event. In other words, the transformer unit may comprise one or more tap changers wherein the controller may be adapted to block a change of a switching state of any or all of the one or more on-load tap changers, particularly for the duration of the fault event. The electrolysis system may comprise the upstream transformer unit and/or the point of connection of the electrolysis system may be electrically connected to the upstream transformer unit.

In one embodiment, the controller is adapted to maintain and/or store a setting of an operating point of the electrolyzer power supply system and/or of the electrolyzer and/or of an auxiliary system, particularly from a point of time before of when the fault event is detected. In other words, the controller may be adapted to freeze and/or store the setting, particularly the pre-fault setting, of the operating point of the electrolyzer power supply system and/or of the electrolyzer and/or of an auxiliary system. The auxiliary system may be a cooling system of the electrolyzer or a management system of the electrolysis input and output material . The auxiliary system may comprise a compressor system for managing the gas output from the electrolyzer and/or the gas input into a storage system. For example, the setting of the operating point may comprise a valve position and/or a temperature. This provides the advantage that the start-up and/or ramp-up after a shutdown of the electrolysis system due to the fault event may be faster.

In one embodiment, the controller is adapted to adjust the operating point of the electrolyzer power supply system and/or of the electrolyzer and/or of the auxiliary system corresponding to the network voltage of the electrical network upon detection of the fault event, particularly when the network voltage is outside the tolerance band and within the stability range from the reference network voltage. In other words, the controller may be adapted to ramp the electrolyzer and/or the electrolyzer power supply system up or ramp the electrolyzer and/or the electrolyzer power supply system down corresponding to the network voltage, particularly when the network voltage is inside the stability range from the reference network voltage.

Additionally, or alternatively, the controller may be adapted to increase or decrease the operating point of the auxiliary system corresponding to the network voltage, particularly when the network voltage is inside the stability range from the reference network voltage. For example, the controller may be adapted to adjust a gas pressure offset of a compressor system corresponding to the network voltage.

This provides the advantage, that a stability of the electrical network may be improved, particularly during a fault event.

In one embodiment, the controller is adapted to maintain the electrolyzer and/or the auxiliary system in a stand-by mode when the network voltage leaves the stability range, wherein the stand-by mode optionally comprises the controller being adapted to control the electrolyzer power supply system to provide a polarization voltage for the electrolyzer and/or the controller being adapted to set the auxiliary system in an auxiliary operating mode which particularly allows an increased cooling of the electrolyzer or a stable temperature, particularly of the electrolyzer. In other words, when the network voltage leaves the stability range from the reference network voltage, the controller may be adapted to set the electrolysis system, particularly the electrolyzer and/or the auxiliary system, into a stand-by mode, which particularly allows a faster start-up or ramp-up when the fault event is over. The stand-by mode may be suitable for slowing down an aging of the electrolyzer, wherein a polarization voltage is provided to the electrolyzer, particularly by the electrolyzer power supply system and/or an energy storage unit. Additionally, or alternatively, the auxiliary system may be adapted to provide an increased cooling of the electrolyzer during the fault event. This provides the advantage that the electrolysis system may start up or ramp up faster after the fault event is over and that additionally an aging of the electrolyzer is slowed down. In an alternative embodiment, it is also possible to instead keep the electrolyzer at a given or stable temperature if this enables a faster start-up of the electrolysis system.

In one embodiment, the controller is adapted to allow the violation of the stability range by the network voltage during an initial start-up and/or a ramp-up of the electrolyzer, particularly from the stand-by mode of the electrolyzer. In other words, the converter may be adapted to tolerate or ignore the violation of the stability range by the network voltage and additionally the violation of the operational threshold by the operating parameter during a start-up or ramp-up of the electrolyzer. For example, the controller may be adapted to ignore a drop of the network voltage beyond the stability range during the start-up and/or ramp-up of the electrolyzer. Further, the controller may be adapted to ramp up the electrolyzer when the network voltage is within the tolerance band. This provides the advantage that an inrush current causing the network voltage to drop beyond the stability range may abort the start-up or ramp-up of the electrolyzer.

Thus, the electrolyzer may safely ramp up after the fault event has ended.

In one embodiment, the electrolysis system further comprises an electrical load which is adapted to receive at least partly the alternating current electrical power input and/or the direct current electrical power input from the electrolyzer power supply system instead of the electrolyzer, wherein the controller optionally is adapted to redirect the alternating current electrical power input and/or the direct current electrical power input from the electrolyzer to the electrical load when the network voltage leaves the tolerance band and/or stability range and/or wherein the controller optionally is adapted to redirect the alternating current electrical power input and/or the direct current electrical power input from the electrical load to the electrolyzer when the network voltage is within the tolerance band and/or stability range from the reference network voltage, particularly corresponding to a ramp-up rate of the electrolyzer.

In other words, the electrical load may be electrically connected to the electrolyzer power supply system, particularly to the transformer unit and/or the converter, and may be any kind of electrical load which at least may be adapted to consume and/or absorb and/or store the electrical power input for the electrolyzer. The electrolyzer power supply system and/or the controller by means of the electrolyzer power supply system may be adapted to provide the alternating current electrical power input and/or the direct current electrical power input to the electrical load and/or the electrolyzer.

Additionally, or alternatively, the controller may be adapted to switch the alternating current electrical power input and/or the direct current electrical power input from the electrolyzer to the electrical load when the network voltage has left the tolerance band and/or stability range.

Additionally, or alternatively, the controller may be adapted to distribute or redirect the alternating current electrical power input and/or the direct current electrical power input from the electrolyzer to the electrical load corresponding to a ramp-down rate of the electrolyzer when the network voltage is outside the tolerance band and inside the stability range from the reference parameter.

Additionally, or alternatively, the controller may be adapted to distribute or redirect the alternating current electrical power input and/or the direct current electrical power input between the electrical load and the electrolyzer corresponding to a ramp-up rate of the electrolyzer, particularly when the network voltage is within the stability range from the reference network voltage.

The electrical load may be adapted to consume the electrical power of the electrolysis system instead of the electrolysis system, particularly at a level before the fault event has occurred, or at a level defined by the grid operator.

This provides the advantage that an electrical load corresponding to the electrical load of the electrolysis system can be provided to the electrical network even during a fault, when the electrolysis process may have stopped, or in case the electrolysis systems trips and disconnects from the electrical network. This measure can also be applied in case the network voltage has left the stability range and the electrolysis has shut down.

In one embodiment, the electrolysis system comprises a plurality of electrolyzers, wherein the controller is adapted to connect or disconnect, particularly to shut down or ramp up, the respective electrolyzer of the plurality of electrolyzers in a sequence, wherein an order of the sequence is particularly based on an aging parameter of the respective electrolyzer and/or an available power consumption of the respective electrolyzer. In other words, the controller may be adapted to start-up or shut-down or trip the respective electrolyzer of a plurality of electrolyzers in a sequence. Additionally, the sequence for connecting or disconnecting, particularly for ramping up or tripping or shutting down or starting up, the respective electrolyzer may be based on the power demand, which may be linked to an aging parameter of the respective electrolyzer. The aging parameter may be derived from or correspond to a current-voltage characteristic of the respective electrolyzer, particularly over a time of operation of the respective electrolyzer. For example, the sequence may comprise that the electrolyzer with the highest power demand (for example due to ageing) may be started up first and/or the electrolyzer with the lowest power demand (for example due to little ageing) may be shut down first. Additionally or alternatively, the sequence may comprise that the electrolyzer with the highest power demand (for example due to ageing) may be allowed to trip last or be shut down last and/or the electrolyzer with the lowest power demand (for example due to little ageing) may be allowed to trip first or be shut down first. This provides the advantage that a stability of the electrical network can be improved when an electrolyzer or its power supply components need to be re-energized or when it has to be disconnected during the fault and be connected again after the fault.

In one embodiment, the electrolysis system further comprises an energy storage unit for storing an electrical energy received from the electrical network, wherein the controller optionally is adapted for a fault ride through event to fill up the energy storage unit at least partly with the electrical energy, and/or wherein the controller is adapted to provide the electrical energy, particularly an active and/or a reactive energy, from the storage unit at least partly to the electrolyzer power supply system and/or to the electrolyzer and/or to the electrical network, particularly after detecting the fault event, and/or wherein the controller is adapted to adjust or maintain a power factor of the electrolyzer power supply system and/or of the electrolyzer, particularly by altering the conversion rate of the converter and/or changing the switching state of the on-load tap changer.

In other words, the controller may be adapted to store the electrical power input, particularly the alternating current electrical power input and/or the direct current electrical power input, at least partly in the energy storage unit. The energy storage unit may be any kind of energy storage, such as a battery and/or a capacitor.

Additionally or alternatively, the controller may be adapted to withdraw the stored electrical energy from the energy storage unit and provide the electrical energy, particularly an active and/or reactive power, at least partly to the electrical network and/or to the electrolysis system and/or to the electrolyzer, particularly when the network voltage is outside the first tolerance band and within the stability range from the reference network voltage or outside the stability range.

Additionally, or alternatively, the controller may be adapted to maintain a constant power factor of the electrolysis system, particularly of the electrolyzer power supply system and/or of the electrolyzer, particularly when the network voltage is outside the tolerance band and within the stability range from the reference network voltage. Additionally, the controller may be adapted to maintain the power factor constant by altering the conversion rate or a boost factor of the converter and/or by changing the switching state of the on-load tap changer.

Additionally or alternatively, the controller may be adapted to adjust or tune the power factor of the electrolysis system, particularly of the electrolyzer power supply system and/or of the electrolyzer, of the electrolysis system, particularly of the electrolyzer power supply system and/or of the electrolyzer, corresponding to the network voltage, particularly when the network voltage is outside the tolerance band and within the stability range from the reference network voltage. Additionally, the controller may be adapted to adjust or tune the power factor by altering the conversion rate or a boost factor of the converter and/or by changing the switching state of the on-load tap changer.

This provides the advantage that a stability of the electrical network may be improved, particularly when the network voltage is between the tolerance band and the stability range.

In one embodiment, the converter is adapted to regulate the direct current electrical power input for the electrolyzer, particularly within an operating current limit of the electrolyzer and/or in a millisecond domain. In other words, the converter supplying the electrolyzer with direct current may regulate the direct current in order to prevent a rapid increase of the direct current flowing through the electrolysis cells. The corresponding controller may be adapted to operate at least in the millisecond domain or range and to detect a fault event as a high voltage ride through event and to resume operation. This provides the advantage that further damage to the electrolysis cells of the electrolyzer due to a fault event can be avoided.

The invention further relates to a method for operating an electrolysis system comprising an electrolyzer power supply system and an electrolyzer, wherein the electrolyzer power supply system comprises at least one transformer unit and a converter and receives an alternating current electrical power input from an electrical network and converts the alternating current electrical power input into a direct current electrical power input for the electrolyzer, which converts the direct current electrical power input into an energy carrier, comprising the steps of:

- Detecting a fault event of the electrical network when a network voltage of the electrical network leaves a tolerance band around a reference network voltage of the electrical network;
- Allowing a violation of an operational threshold of the electrolyzer by an operating parameter, particularly of the electrolyzer power supply system and/or of the electrolyzer, for a predetermined duration when the network voltage is outside the tolerance band and within a stability range from the reference network voltage.

In other words, a violation of the operational threshold by the operating parameter may be tolerated or ignored. Tolerating and/or allowing may comprise detecting or ignoring the violation of the operational threshold by the operating parameter. Additionally or alternatively, tolerating and/or allowing may comprise blocking and/or delaying an action that may be triggered by the violation of the operating parameter. The delay of the action may be at least partly for the predetermined duration. For example, a time constant of a control loop may be delayed.

The operating parameter may be of the electrolysis system or any component thereof, particularly of the electrolyzer power supply system and/or of the electrolyzer and/or of an auxiliary system.

The tolerance band around the reference network voltage may be an interval of the operating parameter, wherein no action of the electrolysis system may take place. For example, the tolerance band can feature an interval between 85% to 115% or 90% to 110% of the reference network voltage, wherein optionally the edge values of the respective interval may be included. The stability range from the reference network voltage may be larger than the tolerance band. When the network voltage leaves the stability range, the electrolysis system may shut down. The stability range may be limited by a low voltage fault ride through and/or a high voltage fault ride through voltage characteristic.

This provides the technical effect that the electrolysis system can continue to operate as an electrical load when the network voltage fluctuates and leaves the tolerance band. Those violations of the operational threshold by the operating parameter are allowable as they remain in a predictable range. By this, the electrolysis system may contribute to a stability of the electrical network.

The method may also include the features of the corresponding electrolysis system and any combination of the corresponding embodiments thereof, particularly with the necessary modifications. Therefore, for the sake of brevity, the embodiments of the electrolysis system are not repeated for said method.

The invention further relates to a computer program comprising instructions which, when the program is executed by a controller, particularly an electrolysis system controller and/or an electrolyzer power supply system controller and/or an electrolyzer controller, cause the controller to carry out the steps of said method. Alternatively, the controller may also be a personal computer.

The controller may comprise means to execute said method, particularly means to control the electrolyzer power supply system, particularly the transformer and/or the converter and/or the on-load tap changer, and/or means to control the electrolyzer and/or an auxiliary system of the electrolyzer. Alternatively, the controller may comprise means for indicating a switching state to be selected for a manual operation of the on-load tap changer.

Additionally or alternatively, the converter may comprise means to drop and/or boost the direct current electrical power input corresponding to an operating point of the electrolyzer, particularly of the converter. This may be done by providing a different setpoint or an offset to an existing setpoint. The controller may further comprise means to activate and/or deactivate a switching element, particularly a thyristor or IGBT, of the respective converter.

Additionally or alternatively, the controller may comprise means to control an operating point of the electrolyzer and/or of an auxiliary system of the electrolyzer, such as a compressor. Additionally or alternatively, the controller may comprise means to redirect the alternating current electrical power input and/or the direct current electrical power input between the electrolyzer and an additional electrical load and/or vice versa. Additionally or alternatively, the controller may comprise means to redirect the alternating current electrical power input and/or the direct current electrical power input between the electrolysis system and/or the electrical network and an electrical storage unit. The controller may further comprise means to control the electrical storage unit.

The invention also relates to a computer-readable storage medium having stored thereon said computer program. In other words, the computer-readable storage medium may be a punched card, a (floppy) disk storage medium, a hard disk, a CD, a DVD, an USB (Universal Serial Bus) storage device, a RAM (Random Access Memory), a ROM (Read Only Memory) and/or an EPROM (Erasable Programmable Read Only Memory). Preferably, the computer-readable storage medium may be a RAM or a ROM, wherein particularly a flash memory is used. The computer readable-storage medium may also be a data communication network which allows downloading a program code, such as the Internet or a server for example.

The invention further relates to a controller, particularly an electrolysis system controller and/or an electrolyzer power supply system controller and/or an electrolyzer controller, comprising said computer-readable storage medium having stored thereon said computer program. The controller may be programmable logic controller (PLC). The controller may comprise at least one processor and said computer-readable storage medium, wherein the computer-readable storage medium comprises said computer program which, when executed by the at least one processor, cause the controller to perform the method as described above. Alternatively, the controller may be a personal computer.

In other words, the at least one processor may be a microprocessor and/or a microcontroller and/or a FPGA (Field Programmable Gate Array) and/or a DSP (Digital Signal Processor).

The controller may comprise means to execute said method, particularly means to control the electrolyzer power supply system, particularly the transformer and/or the converter and/or the on-load tap changer, and/or means to control the electrolyzer and/or an auxiliary system of the electrolyzer. Alternatively, the controller may comprise means for indicating a switching state to be selected for a manual operation of the on-load tap changer.

Additionally or alternatively, the controller may comprise means to control an operating point of the electrolyzer and/or of an auxiliary system of the electrolyzer, such as a compressor.

Additionally or alternatively, the controller may comprise means to redirect the alternating current electrical power input and/or the direct current electrical power input between the electrolyzer and an additional electrical load and/or vice versa. Additionally or alternatively, the controller may comprise means to redirect the alternating current electrical power input and/or the direct current electrical power input between the electrolysis system and/or the electrical network and an electrical storage unit. The controller may further comprise means to control the electrical storage unit.

Additionally or alternatively, the controller may comprise means to change a switching state of the on-load tap changer and/or means to display when a tap selection of the on-load tap changer is to be changed and/or which tap is to be selected for a manual operation of the on-load tap changer.

Additionally or alternatively, the converter may comprise means to drop and/or boost the direct current electrical power input corresponding to an operating point of the electrolyzer, particularly of the converter. The controller may further comprise means to activate and/or deactivate a switching element, particularly a thyristor or IGBT, of the respective converter.

The invention further relates to an electrical power system comprising said electrolysis system and/or said controller. The electrical power system may be a network of electrical components deployed to supply, transfer, and use electric power. The electrical power system may comprise an electrical power source and an electrical load that are connected via an electrical network, wherein particularly the electrical power source and/or the electrical load may comprise the electrolysis system from above. In other words, the electrical power system may comprise an entirety of all technical equipment required for generation, transmission and distribution of electrical energy within a control zone of a distribution area where electrical energy is provided from a producer to a consumer. For example, the electrical power system may comprise a switchyard, which optionally may comprise said controller, wherein the controller particularly may be a switchyard controller.

The invention also relates to realizations comprising a combination of the features of several of the described embodiments.

Brief description of the drawings

The present disclosure will be more readily appreciated by reference to the following detailed description when being considered in connection with the accompanying drawings in which:

Figure 1     shows a schematic view of an electrolysis system comprising an electrolyzer power supply system and one or more electrolyzers;

Figure 2     schematically shows a current-voltage characteristic of an electrolyzer at the beginning of life compared to a current-voltage characteristic of the electrolyzer at the end of life;

Figure 3     schematically shows a high-voltage fault ride through event as an example fault event;

Figure 4     schematically shows a low-voltage fault ride through event as another example fault event; and

Figure 5     shows a schematic flow diagram of the method for operating an electrolysis system during a fault event.

In the following, the invention will be explained in more detail with reference to the accompanying figure. In the Figures, like elements are denoted by identical reference numerals and repeated description thereof may be omitted in order to avoid redundancies.

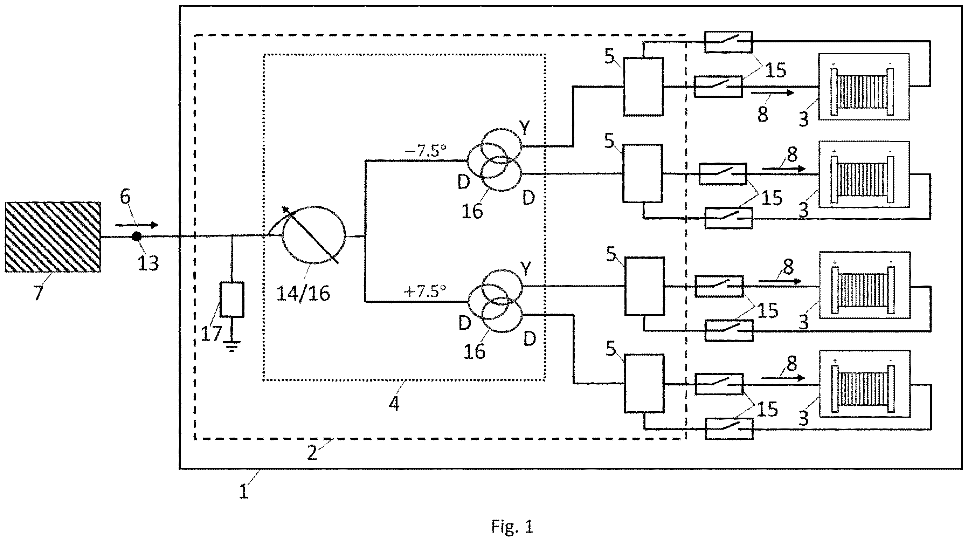

Figure 1 schematically shows an example electrolysis system 1 in a 24-pulse operation. The schematic electrolysis system 1 comprises an electrolyzer power supply system 2 and one or more electrolyzers 3. The electrolyzer power supply system 2 comprises a transformer unit 4 and a converter 5, wherein the transformer unit 4 comprises one or more transformers 16 and optionally an on-load tap changer 16. The transformers 16 may be adapted to provide a phase shift between at least two three-winding transformers 16, particularly with a phase shift of 15°, hence +7.5° and -7.5°.

The converter 5 is adapted to convert an alternating current into a direct current and optionally to drop and/or boost a direct voltage. The electrolyzer power supply system 2 is connected to an electrical grid 7 via a point of connection 13. Optionally, the electrolysis system 1 and/or the electrolyzer power supply system 2 comprises a filter element 17, wherein the filter element may be an active and/or passive filter.

The electrolyzer power supply system 2 is adapted to receive an alternating current electrical power input 6 from the electrical grid 7 and to convert the alternating current electrical power input 6 into a direct current electrical power input 8 for the electrolyzer 3. For this, the electrical power supply system 3, particularly the converter 5, is electrically connected to the electrolyzer 3 via a switching element 15 for connecting and disconnecting the electrolyzer 3.

The electrolyzer 3 is adapted to convert the direct current electrical power input 8 into an energy carrier, such as hydrogen. Auxiliary systems for providing an electrolysis ingredient, such as water, or for providing cooling and/or a compression and/or storage of the energy carrier gases are not shown.

The electrical network 7 may electrically connect a plurality of electrical power sources with a plurality of electrical loads in a network operation mode. Alternatively, the electrical network 7 may also be a line that electrically connects the electrical power source with the point of connection 13 of the electrolyzer power supply system 2 in an island operation mode.

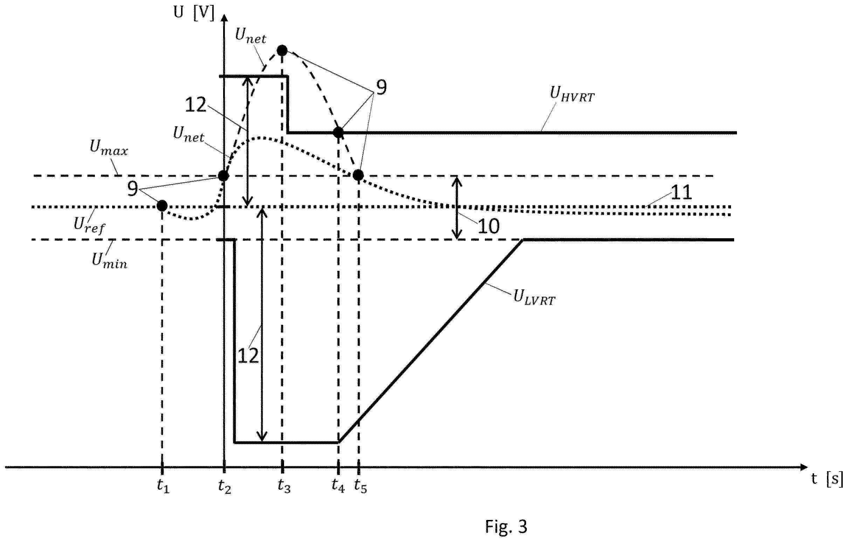

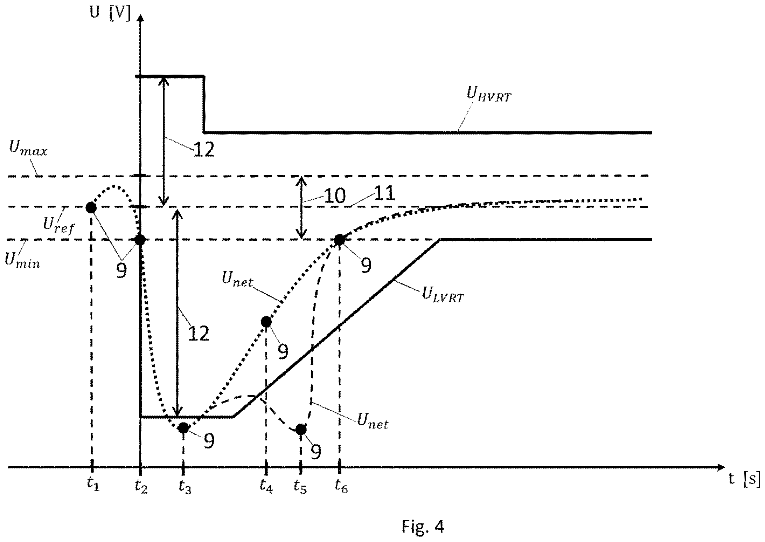

Connecting the electrolysis system 1 to the electrical grid 7 requires compliance with local network code requirements. Part of these requirements, especially for large electrolysis systems 1, is fault ride through capability. The typical core requirement is to remain fully connected to the electrical network 7 during a fault event in which a deviation of a network voltage from a reference network voltage, such as dip or a spike of a network voltage, may occur at the point of connection 13. Here, an operator of the electrical network 7 specifies a curve as shown in Figures 3 and 4 as a stability range for the deviation of the network voltage from the reference network voltage, particularly for the dip or spike of the network voltage and/or network frequency, during which the electrolysis system 1 must remain connected to the electrical network 7 and/or remain operational for functioning as an electrical load. A deviation of the network voltage from the network reference parameter that is longer than a predetermined duration and/or larger than the stability range allows the electrolysis system 1 to disconnect from the electrical grid 7, particularly to disconnect the electrolyzer 3 by means of the switching element 15 or within the converter systems 5.

Meeting this requirement is a challenge for the electrolysis plant and its converter system. Important for the network operator is the availability of the electrolysis system as electrical load after the fault has been removed, the so-called post-fault recovery behavior of the electrolysis system 1. If the electrolysis system 1 shuts down or trips in the event of a short-term deviation of the network voltage from the network voltage in the electrical grid 7, the operator of the electrical network 7 would have difficulty balancing the power inside the electrical network 7 after the disturbance causing the deviation has been cleared.

Therefore, only a certain amount of the electrical load may be disconnected or tripped and it is essential, particularly for large electrical loads, such as the electrolysis system 1 to remain connected or to continue operating as an electrical load if the allowed tolerance band for the network voltage is violated. The allowed lower limit of the tolerance band for the network voltage may be from including 85 % to including 90 % of the reference network voltage. The network voltage may be a network voltage. The fault event may start when the network voltage leaves the tolerance band about the reference network voltage and end when the network voltage returns into the tolerance band.

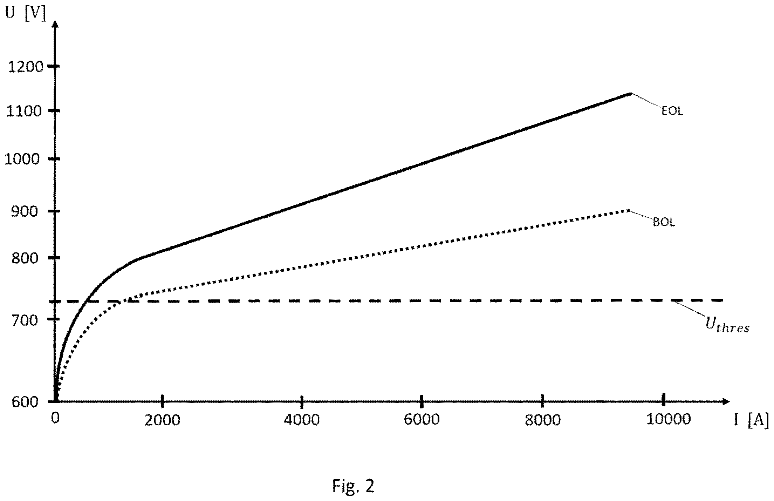

Since a current-voltage characteristic of the electrolyzer 3 is highly dependent on the input voltage of the alternating current input 6 and/or the direct current electrical power input 8, even a small deviation of the network voltage from the reference network voltage, such as voltage drop, will significantly change the electrical power that is absorbed by the electrolyzer 3 as shown in Figure 2. This can lead to a massive imbalance between production and consumption of electrical power, particularly in the range of several Gigawatt of electrical power that the electrolysis system 1 may cease to absorb, either during the fault, when power consumption drops stronger than power production, or after fault clearance, when power consumption and generation do not match each other's power adjustments.

A major challenge is thus to balance the operation of the electrical network 7 during the fault event. The electrical power source (not shown!) meets similar requirements as above and will continue to supply electrical power, especially if the deviation of the network voltage from the reference network voltage is not too large, such as outside a stability range larger than the tolerance band from the reference network voltage. At all times, the generation and consumption of electrical power, particularly of active power, must be balanced in order to keep the frequency of the electrical network 7 stable, even during the time of the fault.

Numerous measures within the electrolysis system 1 are thus required to enable stability for such a fault event. A key enabler is the timely detection of a fault event and the application of the correct countermeasures. Here, the critical network voltage to measure is the network voltage corresponding to the allowable tolerance band about the respective reference network voltage, particularly the reference network voltage, as defined by the operator of the electrical network 7. The network voltage may be measured at the point of connection 13 between the electrolyzer power supply system 2 and the electrical grid 7 and/or within the electrical grid. 7, wherein measuring the network voltage within the electrical grid 7 may require a correction factor. Additionally, a rate of change of the network voltage, such as $\frac{dU}{dt}$ may also be considered.

For example, a distinction between an internal fault of the electrolysis system 1 and a fault event of the electrical network 7 may be made by comparing the rate of change of voltage $\frac{dU}{dt}$ and the rate of change of current $\frac{dI}{dt}$, particularly of respective current carrying phases of the connection point 13 which electrically connect the electrolysis system 1 to the electrical grid 7. This may include an evaluation over discrete time steps, particularly in at least a millisecond time range as well as an evaluation over said rates of change $\frac{dU}{dt}$ and $\frac{dI}{dt}$. The measurement may be made within any of the transformers 16 of the transformer unit 4 and/or the converter 5 and/or the filter element 17 and/or a compensation unit, switchyard or the transformer connecting the entire plant to an electrical network. This measurement may be realized by means of capacitive and inductive voltage and current sensors, such as a capacitive divider and/or a Rogowski coil, which are easy to implement.

In case of an internal fault of the electrolysis system 1, such as a short circuit or an internal fault of a component, the current received from the electrical network 7 by the electrolysis system 1 increases while the network voltage decreases, whereas in case of a fault event of the electrical network 7 such as a low voltage ride through event (LVRT) both decrease. Additionally or alternatively, in case the fault event of the electrical network 7 is a high voltage ride through event (HVRT), the voltage and the current both may increase.

Therefore, by comparing the sign of $\frac{dU}{dt}$ and $\frac{dI}{dt}$ gives:

○ If $\frac{dU}{dt} < 0$ and $\frac{dI}{dt} < 0$ or $\frac{dU}{dt} > 0$ and $\frac{dI}{dt} > 0$ determines a fault event of the electrical grid 7 if the plant operates as an electric load; and

$\circ$ If $\dfrac{dU}{dt} < 0$ and $\dfrac{dI}{dt} > 0$ or $\dfrac{dU}{dt} > 0$ and

$\dfrac{dI}{dt} < 0$ determines a fault event of the electrical grid 7 if the plant operates as an electric source; and

$\circ$ If $\dfrac{dU}{dt} < 0$ and $\dfrac{dI}{dt} > 0$ determines an internal fault of the *dt dt* electrolysis system 1.

Here, the plant and the electrolysis system 1 may share or may be electrically connected to the same point of connection 13.

The corresponding algorithm may be parameterized by means of a simulation. Additionally, a FPGA-based detection software may be used for a fast response.

Additionally or alternatively, if the electrolysis system 1 is operating as an electrical power source for the electrical network 7, particularly in a combined plant, the fault event of the electrical network 7 may be determined if the current being transmitted to the electrical network 7 increases.

Additionally or alternatively, the fault event of the electrical network 7 and/or the internal fault of the electrolysis system 12 may be determined based on a table-based decision matrix.

By definition, a fault ride through event of the electrical network 7 is triggered by a violation of the tolerance band 10 as an allowed tolerance range for the network voltage at the point of connection 13. The electrolysis system 1 may shut down when the network voltage is outside the stability range about the reference network voltage. For example, the stability range may correspond to a low voltage fault ride through and/or a high voltage fault-ride through tolerance range for the network voltage.

Therefore, the network voltage and/or the current between the electrical network 7 and the electrolysis system 1 may be measured at the point of connection and/or within the electrical network 7, particularly corrected by means of a correction and/or offset value or formula. The measurement equipment for measuring the network voltage and the current between the electrical network 7 and the electrolysis system 1 may have a sampling rate and/or a measurement resolution which may be suitable for at least a millisecond range in order to detect the fault event of the electrical network 7 and/or the internal fault of the electrolysis system. Additionally, a trace of the detected fault event may be stored at the respective measurement resolution.

Figure 2 shows a schematic current-voltage characteristic of an electrolyzer at the begin of life and at the end of life.

If the cell voltage drops below the Nernst voltage (about 1.23 V for water electrolysis), a gas production and thus the electrolysis process stops completely. In the example below, the nominal voltage of the electrolyzer system at the beginning of its life is about 980 V, while the threshold for hydrogen production is in the range of 720 V. If the input voltage of the electrolyzer 3 drops quickly to 73 % of the reference network voltage, no significant power can be consumed by the electrolyzer system.

For example, if the electrolysis system 1 is initially operating at 60% part load (6000 A, 900 V DC), reducing the input voltage by 100 V will reduce the DC current by 4,200 A and the power consumption by approximately 75% at the begin of life BOL. If the voltage drops by about 180 V in the example, gas production stops because the electrolysis system voltage is in the Nernst range. By definition, the fault event is cleared when the voltage returns to the defined voltage band, which could be in the range of 110% to 90% or 85%. If the network voltage only recovers to the lower threshold of the voltage band (85%), the input voltage at the converter or rectifier input may be too low to enable pre-fault power consumption of the electrolyzer 3, since the possible power consumption is determined by said current-voltage characteristic. This effect may weaken over the life of the electrolyzer 3, particularly at the end of life EOL.

This leads to a massive imbalance between production and consumption when several Gigawatt of electrolysis capacity are affected at the same time, while the production units continue to operate at only slightly reduced power compared to the pre-fault values. Numerous measures within the electrolysis system 1 are required to enable a fault ride through capability, as the electrolysis system 1 as a whole must meet these requirements.

A key enabler is the timely detection of such events and the application of the correct countermeasures. A major challenge is to balance the operation of the electrical network 7 during the disturbance. Electrical power sources also must meet similar requirements as mentioned above and will continue to provide electrical power, especially if the network voltage drop is not too large (for example, in the case of a grid fault several 100 km away, which could result in a voltage drop down to 90 % of the reference voltage). At all times, the generation and consumption of active power must be balanced in order to keep the network frequency stable, even during the time of the fault. In addition, the on-load tap-changer units 14 of the electrolyzers 3 are generally designed to compensate for a voltage drop of up to 90% from the reference network voltage so that the electrolyzer 3 can reach 100% load.

Numerous measures within the electrolysis system 1 are required to enable fault ride through capability, particularly when the network voltage is between the tolerance band and the stability range, as the plant as a whole must meet these requirements as shown in the example cases of Figures 3 and 4.

The measures as shown in Figures 3 and 4 may be applied to some or all electrical loads within the electrolysis system 1, depending on the respective design and/or characteristic of the electrical load and the respective local network code requirement. Therefore, any combination of the measures as listed in the context of Figures 3 and 4 below may be used to achieve compliance with the respective local network code requirement.

Figure 3 shows a schematic high voltage fault ride through event as an example fault event. The network voltage is denoted by $U_{net}$. The network voltage $U_{net}$ fluctuates around the reference voltage $U_{ref}$ of the electrical network 7 within the tolerance band 10 from the point of time $t_1$ until it leaves the tolerance band 10 at $t_2$, which may correspond to the point of time 0 in Figure 3. The network voltage $U_{net}$ fluctuates outside the tolerance band 10 and within the stability range 12 which corresponds to a high voltage fault ride through characteristic $U_{HVRT}$ between $t_2$ and $t_5$. Thus, the fault event lasts between $t_2$ and $t_5$. Here, the following controller of the electrolysis system 1 is adapted to tolerate a violation of an operational threshold by an operating parameter for a predetermined time in order to maintain the electrolysis system 1 operating as an electrical load. When the network voltage $U_{net}$ leaves the stability range 12 as limited by the $U_{HVRT}$ curve, the electrolysis system 1 may shut down. The electrolysis system 1 may start up or ramp up after the network voltage $U_{net}$ has returned into the tolerance band 10 at $t_5$.

Starting from the point of time $t_2$ when the fault event is detected, the voltage values and time stamps are recorded and the time-dependent voltage characteristic is compared with the high voltage ride through curve requirement. For example, at $t_2$, the network voltage $U_{net}$ and the network current $I$ flowing between the electrolysis system 1 and the electrical network 7 are measured, particularly at the point of connection. If $\frac{dU_{net}}{dt} < 0$ and $\frac{dI}{dt} < 0$ or if $\frac{dU_{net}}{dt} > 0$ and $\frac{dI}{dt} > 0$, a fault event of the electrical grid is determined, particularly when the electrolysis system 1 operates as an electrical load.

Additionally or alternatively, if $\frac{dU_{net}}{dt} < 0$ and $\frac{dI}{dt} > 0$, an internal fault of the electrolysis system 1 is determined, particularly when the electrolysis system 1 operates as an electrical load.

Additionally or alternatively, if $\frac{dU_{net}}{dt} < 0$ and $\frac{dI}{dt} > 0$, particularly at the point of connection, a fault event of the electrical grid is determined, particularly when the electrolysis system 1 is part of a combined power plant comprising combined generation and storage units for electric power. The plant as a whole may be an electrical power source. Here, the electrolysis system 1 may be electrically connected to the point of connection 13 of the plant to the electrical network 7.

Additionally, $\frac{dU_{net}}{dt}$ and $\frac{dI}{dt}$ are determined in at least two current carrying phases of a multi-phase system such as a three phase system, wherein the current carrying phases electrically connect the electrolysis system 1 to the electrical network 7. When the fault event of the electrical network 7 or the internal fault event of the electrolysis system 1 is respectively determined in the at least two current carrying phases, the fault event of the electrical network 7 or the internal fault event of the electrolysis system 1 is determined for the multi-phase system as a whole.

Additionally or alternatively, the controller may be adapted to an internal fault of the electrolysis system if $\frac{dU}{dt} < 0$ and $\frac{dI}{dt} > 0$, particularly when the electrolysis system may operate as an electrical load.

Additionally or alternatively, the controller of an electrical power source may be adapted to determine the fault event of the electrical grid if $\frac{dU}{dt} < 0$ and $\frac{dI}{dt} > 0$, particularly when the electrolysis system may be operated in an electrical power source due to the production of excess power by power generating units within the plant. Here, the power plant and the electrolysis system 1 may share the same network connection, particularly the same point of connection 13.

During the fault event, a network voltage $U_{net}$ that is higher than the maximum voltage $U_{max}$ of the tolerance band 10 may cause a violation of an operational threshold by an operating parameter of the electrolyzer power supply system 2 and/or of the electrolyzer 3 and/or of an auxiliary system of the electrolyzer 3. Here, allowing or tolerating the violation by the operational parameter may comprise at least one of or any combination of the following measures, particularly as long as the network voltage $U_{net}$ is outside the tolerance band 10 and inside or within the stability range 12, for example at $t_4$ :

First, the associated on-load tap changer 14 of the transformer unit 4 or that of any transformer upstream from the electrolysis may be blocked for a predetermined duration, particularly corresponding to the required high voltage fault ride through curve. This avoids an unnecessary switching of the on-load tap changer 14 if the on-load tap changer 14 is unable to perform multiple steps within at least a reasonable part of the predetermined duration to avoid unwanted or unnecessary disturbances to the operation of the electrolysis system 1, such as multiple switching in less than 1 second. The blocking may be released if the network voltage $U_{net}$ exceeds the stability

range 12 as defined by the high voltage fault ride through curve or if the voltage returns to the tolerance band 10.

Additionally or alternatively, a switching state of the on-load tap changer 14, particularly of a transformer 16 that is directly electrically connected to the electrical network 7 and/or of a transformer 16 that is directly electrically connected to the converter 5 and/or the on-load tap changer 14 of any intermediate transformer, may be actively changed, particularly to at least one lower tap position in order to cope with a conversion rate of the converter 5, particularly with a boost mode operation of the converter 5 which may be a rectifier.

Additionally or alternatively, the converter system 5 supplying the electrolysis system 3 with power may regulate the DC current feeding the electrolysis to prevent a rapid increase in DC current flowing through the electrolysis cells. The corresponding controller is required to operate at least in the ms domain and detect the event as a high voltage ride through event and resume operation, in contrast to an electrolysis fault event which would also cause an increase of DC current flow but would not be caused by a strong drop of input voltage.

If the voltage leaves the stability range as defined by the high voltage fault ride through curve, the electrolysis system is allowed to shut down or trip. Optionally, a shut-down and/or trip signal is sent, particularly by a controller of the electrolysis system 1.

Additionally or alternatively, the shut-down and/or trip limit of the electrolysis system 1 may be defined by the operator of the electrical network 7, particularly depending on a pre-defined limit of violation of an operational threshold by an operating parameter of the electrolysis system 1.

Additionally or alternatively, the electrolyzer 3 enters in a stand-by mode in the event of a shut-down of the electrolyzer 3 due to overvoltage. Said stand-by mode allows a quick restart of the electrolyzer 3 after the fault event has been cleared at $t_5$. The stand-by mode may also comprise measures to reduce an aging of the electrolyzer 3, such as maintaining to provide a polarization voltage by the converter 5. Additionally or alternatively, an auxiliary systems required for the stand-by mode may be restarted if fast enough or their power supply buffered.

Additionally or alternatively, the auxiliary system may be set into an auxiliary operating mode which allows an increased cooling of the electrolyzer 3 or provision of a stable temperature. For instance, the auxiliary system may comprise a compressor system that enters in a "recycle/zero mass flow" mode, which allows a quick restart of the electrolyzer 3 after the fault event has been cleared at $t_5$.

Additionally or alternatively, an additional electrical load such as a chopper resistor may be activated to match the pre-fault power consumption at the point of time $t_2$ of the electrolysis system 1, particularly with an accuracy of $\pm 10/\%$ in order to prevent a loss of electrical input power in the event of a disconnection or trip of the electrolysis system or parts of it. Upon a restart of the electrolysis system 1 after the network voltage $U_{net}$ has returned into the stability range 12, said additional electrical load would be shut down to match a ramp-up rate of the electrolyzer 3 and optionally additional auxiliary systems. The power adjustment between these systems may be continuous, optionally with a support of smoothing power storage systems, or in discrete steps, e.g. if the additional electrical load can only be switched on/off without the possibility to control the power input. Here, a converter system may not be used for economic reasons.

To balance the power exchange of a combined plant comprising the electrolysis system 1 as an electrical load and at least one electrical power source, a controller of the plant may adjust the power generation/consumption within the schedule to keep the power exchange with the electrical network 7 within the tolerance allowed by the network operator or to prevent a reversal of the flow of electrical power between the plant and the electrical network 7. For example, if part of an electrical power generation by the plant is shut down, it may be necessary to shut down an electrical load with a capacity of equivalent electrical power, or vice versa. It may also be necessary to completely shut down the production and/or consumption units of electrical power plant at least partly or completely if the electrical power plant is consuming electrical power from the electrical network 7. If the electrical power plant's internal consumption of electrical power exceeds its internal generation of electrical power, a complete shutdown may be necessary to prevent a power reversal at the point of connection 13. In such a case, the units of the electrical power plant that are shut down shall enter a stand-by mode which allows a quick restart of the units after the fault event. After the fault has been cleared and the unit of the electrical power plant has been shut down, it can be restarted as soon as the operator of the electrical network 7 agrees. The ramp-up rate of the respective electrolyzer 3 unit may be determined by the respective limit defined by the stand-by state.

Figure 4 shows a schematic low-voltage fault ride through event as another example fault event. The network voltage is denoted by $U_{net}$, which fluctuates around the reference voltage $U_{ref}$ of the electrical network 7 within the tolerance band 10 from the point of time $t_1$ until it leaves the tolerance band 10 at $t_2$. At $t_2$, the fault event of the electrical grid 7 or an internal fault of the electrolysis system 1 may be determined as in Figure 3 above, wherein $t_2$ may correspond to the point of time 0 in Figure 4.

The network voltage $U_{net}$ fluctuates outside the tolerance band 10 and within the stability range 12 which corresponds to a low voltage fault ride through characteristic $U_{LVRT}$ between $t_2$ and $t_6$. Between $t_2$ and $t_6$ and if the network voltage $U_{net}$ remains within the stability range 12, a violation of an operational threshold by an operating parameter is allowed or tolerated for a predetermined time in order to maintain the electrolysis system 1 operating as an electrical load. When the network voltage $U_{net}$ leaves the stability range 12 as limited by the $U_{LVRT}$ curve such as at $t_3$ or $t_4$, the electrolysis system 1 may shut down. After the network voltage $U_{net}$ has returned into the tolerance band 10, the electrolysis system 1 may start up again.

When the tolerance band 10 around the reference voltage $U_{ref}$ and/or a defined lower voltage limit $U_{min}$ of the tolerance band 10 is exceeded by an undervoltage event, low voltage ride through (LVRT) settings are activated. If necessary, this event can be distinguished from a short voltage dip caused by the (planned) start-up of the electrolysis system 1. Particularly, when the available short-circuit electrical power is low compared to the electrical power requirement of the electrolysis system 1, starting up the electrolysis system 1, particularly the transformer 16 and/or the converter 5 and/or the electrolyzer 3, may cause a voltage dip of the network voltage $U_{net}$ outside the tolerance band 10 and/or even below the stability range 12 which may be limited by $U_{LVRT}$ due to a high inrush current from the electrical network 7. An example is shown at $t_5$ where the network voltage $U_{net}$ is close to the lower limit of the stability range 12 which corresponds to $U_{LVRT}$ and the start-up of the electrolyzer 3 causes the network voltage $U_{net}$ to shortly drop below $U_{LVRT}$. Said inrush current may as well cause the network voltage $U_{net}$ to drop outside the tolerance band 10. When the start-up and/or the ramp/up of the electrolysis system 1 could cause a violation of the tolerance band 10 and/or even of the stability range 12, particularly at the point of connection 13, the violation of an operational threshold by the operating parameter is allowed or tolerated for the start-up period. Additionally, no $\frac{dU}{dt}$ and $\frac{dI}{dt}$ settings are used or ignored to trigger the detection of the fault event and/or an activation of low voltage fault ride through settings is blocked and/or a time threshold is adjusted for activating the low voltage fault ride through settings. Thus, the controller may be adapted to allow a violation of an operational threshold by an operating parameter of the electrolyzer power supply system 4 and/or of the electrolyzer 3 for a predetermined duration when the network voltage $U_{net}$ is outside the tolerance band 10 and/or outside the stability range 12 from the reference network voltage 9 during a start-up or ramp-up of the electrolyzer 3.

Additionally, at least one of or any combination of the following measures is made in order to maintain the electrolysis system 1 operating as an electrical load between $t_2$ and $t_6$:
The voltage values of the network voltage $U_{net}$ and corresponding time stamps are recorded and the time-dependent voltage characteristic of $U_{net}$ is compared with the low voltage fault ride through curve requirement.
Additionally or alternatively, if the voltage-time characteristic of $U_{net}$ exceeds the low voltage fault ride through curve limit $U_{LVRT}$, the electrolysis system 1 is allowed to shut down and, if desired, a shut-down and/or a trip signal is sent.

Additionally or alternatively, the operator of the electrical network can define the shut down or trip limits of the electrolysis system 1 depending on the pre-defined limits of the electrolysis system 1.

Additionally or alternatively, the low voltage fault ride through event may directly affect the direct current feeding of the electrolyzer 3 and thus the gas production. In order to ride through the fault event, an operating point of the electrolysis system 1, particularly of the transformer 16 and/or of the converter 5 and/or of the electrolyzer 3 and/or of the auxiliary system is maintained or stored, such as a valve position or the like to support a fast ramp-up of the electrolysis system 1 after the fault event has been cleared by providing the former operating points to the relevant control systems, for example as updated operating points.

Additionally or alternatively, the operating point of an auxiliary system, such as a production mass flow control element setting or an actuator setting may be maintained and/or stored. Additionally or alternatively, a time constant of a control loop may be reduced, particularly in a manner to activate a fast control mode which allows a timely reaction to the adjusted mass flows.

Additionally or alternatively, the operating point of the auxiliary system may comprise a cooling mass flow. During the stand-by mode of the electrolyzer 3, the cooling mass flow of the auxiliary system may be increased to protect the electrolyzer 3 or regulated in order to provide a constant temperature to the electrolysis system required for faster ramp-up after the fault is cleared.

Additionally or alternatively, the auxiliary system may comprise a compressor, wherein a setpoint of the compressor may be shifted during the stand-by mode of the electrolyzer 3 according to a change of production of the energy carrier. Alternatively, if a buffer tank or volume between the electrolyzer 3 and the compressor is sufficiently sized, the setpoint may remain unchanged.

Additionally or alternatively, the auxiliary system, particularly the compressor system, enters an auxiliary operating mode in the event of a system shutdown due to undervoltage, wherein the auxiliary operating mode particularly allows a quick restart after the fault has been cleared. The auxiliary operating mode may be a "recycle/zero mass flow mode" of the compressor system.

Additionally or alternatively, a time delay for operational shutdown due to threshold violations of the electrolyzer 3 is increased, whereas a time delay for safety relevant measurements is not adjusted. Depending on the reaction time of the electrochemical process of the electrolyzer 3 and/or the required reaction time of the electrolyzer 3 to prevent a critical condition, certain safety-related measurements may be modified by adjusting the respective threshold value, the integral of the threshold value or the delay time. The reason for these modifications is that during such a fault event, the violation of the operating thresholds can be tolerated since it is known that the cause is due to a disturbance in the power supply by the electrical network 7 and not to the electrolysis system 1 itself.

Additionally or alternatively, the voltage of the electrolysis system 1 may be adjusted in order to allow a quick start of the electrolysis system 1 after the fault event has been cleared. This is due to the high voltage dependence of the absorption of direct current and gas production by the electrolysis system 1 as shown in Figure 2. Therefore, the controller is adapted to operate the on-load tap changer 14 for changing a switching state for compensating the voltage dip of the network voltage $U_{net}$ particularly when a low voltage fault ride through event is detected to ensure sufficient power supply of the electrolyzer 3 after the fault event is cleared. Additionally or alternatively, the voltage control of the converter system 5 may be adjusted to boost the voltage sufficiently to allow further operation of the electrolysis after fault clearance.

Additionally or alternatively, other measures may be taken to increase the voltage input such as a capacitive current injection and/or a switching operation or setpoint adjustment of the converter 5 and/or on of the transformer 16. All these operations can be performed after the voltage has left the tolerance band 10 at $t_2$ (possibly with a delay or depending on the actual voltage dip of the network voltage $U_{net}$). It is possible to operate the on-load tap changer 14 of the line transformer 16 or the on-load tap changer 14 of any downstream transformer or to operate more than one downstream on-load tap changer or to apply additional measures instead of / in addition to ensuring a sufficient voltage increase at the electrolyzer 3.

Additionally or alternatively, the setpoints or control schemes of the converter 5 which optionally is capable of reactive power adjustment may be adjusted to provide a stable power factor $cos(\phi)$ at the point of connection 14, and/or to provide a capacitive current to the electrical network 7, e.g., based on a $Q(U)$ control scheme or a voltage limiting function, and/or to provide a predefined reactive power or current, and/or to provide the maximum capacitive power/current currently available.

Additionally or alternatively, after the fault has been cleared, measures to reduce the inrush current may be applied, especially in cases where the network voltage $U_{net}$ is recovering quickly. These additional measures

$$\frac{dU}{dt}$$

may be activated when a defined and/or time dependent voltage recovery value or other equation is exceeded and may modify the ramp-up rate of the electrolyzer 3 or adjust the connection/restart of parallel electrolyzers 3. In particular, these measures take into account the restarting or charging of a transformer 16, the electrolyzer 3 and/or the auxiliary system, particularly downstream. In order to reduce the total inrush current, it is possible to switch on or ramp-up the various transformers 16 and/or electrolyzers 3 and/or auxiliary systems of the electrolysis system 1 one after the other.

Additionally or alternatively, the electrolyzer 3 and/or the auxiliary system and/or the electrolyzer power supply system 4 goes into a stand-by mode if the electrolysis system 1, particularly the electrolyzer 3 and/or the electrolyzer power supply system 4 and/or the auxiliary system, shuts down or trips due to undervoltage. Said stand-by mode allows a quick restart after the fault event has been cleared. Measures to reduce an aging of the electrolyzer 3 such as applying a polarization voltage to the electrolyzer 3 by the converter may be applied during the stand-by mode. Additionally or alternatively, an auxiliary system required for the stand-by mode can either be restarted if fast enough or be buffered.

The stand-by mode may include the activation of a polarization unit to prevent the voltage of the electrolyzer 3 from dropping below the Nernst voltage, optionally with a defined safety margin. This measure is used to prevent the electrolyzer 3 from entering a harmful fuel cell mode.

Additionally or alternatively, in order to avoid loss of electrical power input 6, 8 when the electrolysis system 1 shuts down or trips, additional electrical loads (such as chopper resistors) may be activated to match the pre-fault consumption of electrical power by the electrolysis system 1, particularly with an accuracy of plus/-minus 10%. Preferably, these electrical loads provide a stable current consumption, which is preferably equal to the pre-fault current consumption of the electrolysis system 1. When the electrolysis system 1 is restarted, these additional electrical loads may be shut down in a manner that matches the ramp-up rate of the electrolysis system 1 and optionally of additional auxiliary systems. The power adjustment between these systems may be continuous, possibly with the support of smoothing power storage systems, or in discrete steps, e.g. if the additional electrical load can only be switched on/off without the possibility to control the electrical power input 6, 8 (for economic reasons a converter system may not be used).

Additionally or alternatively, additional electrical loads may be activated to match the required power consumption characteristic if power is required during the fault, for example to enable a linear power drop in relation to the voltage drop (voltage drop of 20% equals power input drop of 20%). An additional control loop can be enabled to monitor and control the power consumption during the fault event. This auxiliary control loop and the additional electrical load may be deactivated after the fault event has cleared or the rest of the electrolysis system 1 has returned to pre-fault power consumption.

Additionally or alternatively, after the fault has been cleared and the electrolysis system 1 has been shut down or has tripped, the electrolysis system 1 can be restarted. The ramp-up rate of the electrolysis system 1 may be determined by the respective limit defined by the stand-by mode of the electrolyzer 3 or operational limits, which may be provided by the grid operator or the downstream process.

The measures as listed in Figure 3 and Figure 4 may also be combined.

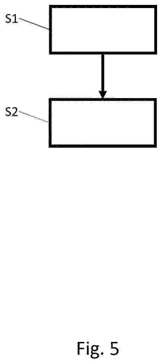

Figure 5 shows a schematic flow diagram of the method for operating the electrolysis system 1.

In a first step S1, a fault event of the electrical network 7 is detected when a network voltage 9 of the electrical network 7 leaves tolerance band 10 around a reference network voltage 11 of the electrical network 7.

Additionally, the fault event of the electrical network 7 is detected when a rate of change of the network voltage 9 and a rate of change of a network current received by the electrolyzer power supply system 2 from the electrical network 7 via a point of connection 13 of the electrolyzer power supply system 2 to the electrical network 7 both have a same direction, particularly in at least two current carrying phases of the point of connection 13. This may be applied when the electrolysis system 1 operates an electrical load.

Additionally or alternatively, the fault event of the electrical network 7 is detected when a rate of change of the network voltage 9 and a rate of change of the network current transmitted from a plant to the electrical network 7 via the point of connection 13 both have a different direction, particularly in at least two current carrying phases of the point of connection 13. The plant may comprise the electrolysis system 1 and an electrical power source, which may be electrically connected to the point of connection 13. The plant is electrically connected to the electrical network 7 via the point of connection. The fault event is determined at an operating point of the plant, where the electrical power source produces more electrical power than the electrolysis system 1 consumes or is adapted to consume. This may be applied when the electrolysis system 1 is part of the plant.

Additionally or alternatively, an internal fault is detected when the rate of change of the network voltage 9 and the rate of change of the network current received by the electrolyzer power supply system 2 from the electrical network 7 both have a different direction, particularly in the at least two current carrying phases of the point of connection 13. This may be applied when the electrolysis system 1 operates an electrical load.

In a second step S2, a violation of an operational threshold of the electrolyzer 3 by an operating parameter, particularly of the electrolyzer power supply system (2) and/or of the electrolyzer (3), is allowed for a predetermined duration when the network voltage 9 is outside the tolerance band 10 and within a stability range 12 from the reference network voltage 11.

Additionally, a switching state of an on-load tap changer 14 is changed and/or a conversion rate of the converter 5 is altered for adjusting the direct current electrical power input 8 of the electrolyzer 3 corresponding to the network voltage 9 of the electrical network 7 when the network voltage 9 is outside the tolerance band

10 and within the stability range 12 from the reference network voltage 11. Alternatively, the on-load tap changer 14 is temporarily prevented from switching for a duration of the fault event.

Additionally or alternatively, a setting of an operating point of the electrolyzer power supply system 2 and/or of the electrolyzer 3 and/or of an auxiliary system is maintained and/or stored, particularly from a point of time $t_1$ before of when the fault event is detected.

Additionally or alternatively, the operating point of the electrolyzer power supply system 2 and/or of the electrolyzer 3 and/or of the auxiliary system is adjusted corresponding to the network voltage 9 of the electrical network 7 upon detection of the fault event, particularly when the network voltage 9 is outside tolerance band 10 and within the stability range 12 from the reference network voltage 11.

Additionally or alternatively, the electrolyzer 3 and/or the auxiliary system is maintained in a stand-by mode when the network voltage 9 leaves the stability range 12, wherein the stand-by mode optionally comprises controlling the electrolyzer power supply system 2 or an auxiliary system to provide a polarization voltage for the electrolyzer 3 and/or setting the auxiliary system in an auxiliary operating mode which particularly allows an increased cooling of the electrolyzer 3 or enables a stable temperature.

Additionally or alternatively, a violation of the stability range 12 by the network voltage 9 is allowed or tolerated during an initial start-up and/or a ramp-up of the electrolyzer 3, particularly from the stand-by mode of the electrolyzer 3.

Additionally or alternatively, the alternating current electrical power input 6 and/or the direct current electrical power input 8 is redirected from the electrolyzer 3 to an electrical load, which is adapted to receive at least partly the alternating current electrical power input 6 and/or the direct current electrical power input 8 from the electrolyzer power supply system 2 instead of the electrolyzer 3, when the network voltage 9 leaves the stability range 12.

Additionally or alternatively, the alternating current electrical power input 6 and/or the direct current electrical power input 8 is redirected from the electrical load to the electrolyzer 3 when the network voltage 9 is within the stability range 12 or within the tolerance band 10 from the reference network voltage 11, particularly corresponding to a ramp-up rate of the electrolyzer 3.

Additionally or alternatively, the respective electrolyzer 3 of a plurality of electrolyzers 3 is connected or disconnected, particularly shut down or ramped up, in a sequence, wherein an order of the sequence is particularly based on an aging parameter of the respective electrolyzer 3 and/or the available power consumption.

Additionally or alternatively, an energy storage unit for storing an electrical energy received from the electrical network 7, is filled up at least partly with the electrical energy, particularly with the active and/or the reactive energy.

Additionally or alternatively, the electrical energy, from the storage unit is provided as active and/or reactive power at least partly to the electrolyzer power supply system 2 and/or to the electrolyzer 3 and/or to the electrical network 7, particularly after detecting the fault event.

Additionally or alternatively, a power factor of the electrolyzer power supply system 2 and/or of the electrolyzer 3 is adjusted or maintained, particularly by altering the conversion rate of the converter 5 and/or changing the switching state of the on-load tap changer 14.

Additionally or alternatively, the direct current electrical power input 8 for the electrolyzer 3 is regulated, particularly within an operating current limit of the electrolyzer 3 and/or in a milli-second domain.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

**Claims**

1. Electrolysis system (1) comprising an electrolyzer power supply system (2) and an electrolyzer (3), wherein the electrolyzer power supply system (2) comprises at least one transformer unit (4) and a converter (5) and is adapted to receive an alternating current electrical power input (6) from an electrical network (7) and to convert the alternating current electrical power input(6) into a direct current electrical power input (8) for the electrolyzer (3), which is adapted to convert the direct current electrical power input (8) into an energy carrier, further comprising a controller, particularly an electrolyzer power supply system controller and/or an electrolyzer controller that is adapted to detect a fault event of the electrical network (7) when a network voltage (9) of the electrical network (7) leaves a tolerance band (10) around a reference network voltage (11) of the electrical network (7),
   **characterized in that**
   the controller is adapted to allow a violation of an operational threshold by an operating parameter, particularly of the electrolyzer power supply system (2) and/or of the electrolyzer (3), for a predetermined duration when the network voltage (9) is outside the tolerance band (10) and within a stability range (12) from the reference network voltage (11).

2. Electrolysis system (1) according to claim 1, **characterized in that** the controller is adapted to detect the fault event of the electrical network (7) when a rate of change of the network voltage (9) and a rate of change of a network current received by the electrolyzer power supply system (2) from the electrical network (7) via a point of connection (13) of the electrolyzer power supply system (2) to the electrical network (7) both have a same direction and/or when a rate of change of the network voltage (9) and a rate of change of the network current transmitted to the electrical network (7) via the point of connection (13) both have a different direction, particularly in at least two current carrying phases of the point of connection (13), and/or the controller is adapted to detect an internal fault when the rate of change of the network voltage (9) and the rate of change of the network current received by the electrolyzer power supply system (2) from the electrical network (7) both have a different direction, particularly in the at least two current carrying phases of the point of connection (13).

3. Electrolysis system (1) according to one of the preceding claims, **characterized in that** the transformer unit (4) optionally comprises an on-load tap changer (14) and the controller is adapted to change a switching state of the on-load tap changer (14) and/or the controller is adapted to alter a conversion rate of the converter (5) for adjusting the direct current electrical power input (8) of the electrolyzer (3) corresponding to the network voltage (9) of the electrical network (7) when the network voltage (9) is outside the tolerance band (10) and within the stability range (12) from the reference network voltage (11).

4. Electrolysis system (1) according to claim 1 or 2, **characterized in that** the transformer unit (4) or any other upstream transformer unit between the electrolysis system (1) and the electrical network (7) comprises the on-load tap changer (14) and the controller is adapted to temporarily prevent a switching of the on-load tap changer for a duration of the fault event.

5. Electrolysis system (1) according to one of the preceding claims, **characterized in that** the controller is adapted to maintain and/or store a setting of an operating point of the electrolyzer power supply system (2) and/or of the electrolyzer (3) and/or of an auxiliary system, particularly from a point of time ($t_1$) before of when the fault event is detected.

6. Electrolysis system (1) according to one of the preceding claims, **characterized in that** the controller is adapted to adjust the operating point of the electrolyzer power supply system (2) and/or of the electrolyzer (3) and/or of the auxiliary system corresponding to the network voltage (9) of the electrical network (7) upon detection of the fault event, particularly when the network voltage (9) is outside the tolerance band (10) and within the stability range (12) from the reference network voltage (11).

7. Electrolysis system (1) according to one of the preceding claims, **characterized in that** the controller is adapted to maintain the electrolyzer (3) and/or the auxiliary system in a stand-by mode when the network voltage (9) leaves the stability range (12), wherein the stand-by mode optionally comprises the controller being adapted to control the electrolyzer power supply system (2) to provide a polarization voltage for the electrolyzer (3) and/or the controller being adapted to set the auxiliary system in an auxiliary operating mode which particularly allows an increased cooling of the electrolyzer (3) or a stable temperature, particularly of the electrolyzer (3).

8. Electrolysis system (1) according to one of the preceding claims, **characterized in that** the controller is adapted to allow the violation of the stability range (12) by the network voltage (9) during an initial start-up and/or a ramp-up of the electrolyzer (3), particularly from the stand-by mode of the electrolyzer (3).

9. Electrolysis system (1) according to one of the preceding claims, **characterized in that** further comprising an electrical load which is adapted to receive at least partly the alternating current electrical power input (6) and/or the direct current electrical power input (8) from the electrolyzer power supply system (2) instead of the electrolyzer (3), wherein the controller optionally is adapted to redirect the alternating current electrical power input (6) and/or the direct current electrical power input (8) from the electrolyzer (3) to the electrical load when the network voltage (9) leaves the tolerance band (10) and/or the stability range (12) and/or wherein the controller optionally is adapted to redirect the alternating current electrical power input (6) and/or the direct current electrical power input (8) from the electrical load to the electrolyzer (3) when the network voltage (9) is within the tolerance band (10) and/or stability range (12) from the reference network voltage (11), particularly corresponding to a ramp-up rate of the electrolyzer (3) .

10. Electrolysis system (1) according to one of the preceding claims, **characterized in that** comprising a plurality of electrolyzers (3), wherein the controller is adapted to connect or disconnect, particularly to shut down or ramp up, the respective electrolyzer (3) of the plurality of electrolyzers (3) in a sequence, wherein an order of the sequence is particularly based on an aging parameter of the respective electrolyzer (3) and/or an available power consumption of the respective electrolyzer (3).

11. Electrolysis system (1) according to one of the preceding claims, **characterized in that** further comprising an energy storage unit for storing an electrical energy received from the electrical network (7), wherein the controller optionally is adapted for a fault ride through event to fill up the energy storage unit at least partly with the electrical energy, and/or wherein the controller is adapted to provide the electrical energy, particularly an active and/or a reactive energy, from the storage unit at least partly to the electrolyzer power supply system (2) and/or to the electrolyzer (3) and/or to the electrical network (7), particularly after detecting the fault event, and/or wherein the controller is adapted to adjust or maintain a power factor of the electrolyzer power supply system (2) and/or of the electrolyzer (3), particularly by altering the conversion rate of the converter (5) and/or changing the switching state of the on-load tap changer (14).

12. Electrolysis system (1) according to one of the preceding claims, **characterized in that** the converter (5) is adapted to regulate the direct current electrical power input (8) for the electrolyzer (3), particularly within an operating current limit of the electrolyzer (3) and/or in a millisecond domain.

13. Method for operating an electrolysis system (1) comprising an electrolyzer power supply system (2) and an electrolyzer (3), wherein the electrolyzer power supply system (2) comprises at least one transformer unit (4) and a converter (5) and receives an alternating current electrical power input (6) from an electrical network (7) and converts the alternating current electrical power input (6) into a direct current electrical power input (8) for the electrolyzer (3), which converts the direct current electrical power input (8) into an energy carrier, comprising the steps of:

   - Detecting a fault event of the electrical network (7) when a network voltage (9) of the electrical network (7) leaves a tolerance band (10) around a reference network voltage (11) of the electrical network (7);
   - Allowing a violation of an operational threshold of the electrolyzer (3) by an operating parameter, particularly of the electrolyzer power supply system (2) and/or of the electrolyzer (3), for a predetermined duration when the network voltage (9) is outside the tolerance band (10) and within a stability range (12) from the reference network voltage (11).

14. Computer program comprising instructions which, when the program is executed by a controller, particularly by an electrolysis system controller and/or an electrolyzer power supply system controller and/or an electrolyzer controller, cause the controller to carry out the steps of the method of claim 13.

15. Computer-readable storage medium having stored thereon the computer program of claim 14.

16. Controller, particularly an electrolysis system controller and/or an electrolyzer power supply system controller and/or an electrolyzer controller, comprising a computer-readable storage medium having stored thereon the computer program of claim 14 and optionally means to execute the method of claim 13.

17. Electrical power system comprising the electrolysis system (1) of one of the claims 1 to 12 and/or the controller of claim 16.

Fig. 1

Fig. 2

EP 4 704 283 A1

Fig. 3

Fig. 4

Fig. 5

| | Europäisches Patentamt European Patent Office Office européen des brevets | **EUROPEAN SEARCH REPORT** | **Application Number** EP 24 19 6991 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAHA PANKAJ ET AL: "Enabling LVRT Compliance of Electrolyzer Systems Using Energy Storage Technologies", BATTERIES, vol. 9, no. 11, 24 October 2023 (2023-10-24), page 527, XP093212586, Basel ISSN: 2313-0105, DOI: 10.3390/batteries9110527 | 1,3,6-9, 11,13-17 | INV. H02J3/00 C25B1/04 C25B1/02 H02J3/14 C25B15/02 |
| Y | * paragraph [0091] - paragraph [0093]; figures 2b,2c * * figure 7 * | 2,4,5,10 | |
| X | US 2021/363651 A1 (SEYMOUR ERIC [US] ET AL) 25 November 2021 (2021-11-25) * paragraph [02.2]; figures 1,2 * * paragraph [04.2] * | 1,9, 11-17 | |
| X | CN 116 683 751 A (SUNSHINE HYDROGEN ENERGY TECH CO LTD) 1 September 2023 (2023-09-01) * paragraph [0067] - paragraph [0070]; figure 1 * * paragraph [0084] * | 1,9,11, 13-17 | |
| | | | TECHNICAL FIELDS SEARCHED (IPC) |
| | | | H02J |
| Y | US 5 572 138 A (NIMMERSJOE GUNNAR [SE]) 5 November 1996 (1996-11-05) * figure 1 * | 2 | |
| | -/-- | | |

The present search report has been drawn up for all claims

| Place of search | Date of completion of the search | Examiner |
|---|---|---|
| Munich | 25 January 2025 | Maucher, Bastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 19 6991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BOEMER JENS C ET AL: "Response of wind power park modules in distribution systems to transmission network faults during reverse power flows", IET RENEWABLE POWER GENERATION, THE INSTITUTION OF ENGINEERING AND TECHNOLOGY, MICHAEL FARADAY HOUSE, SIX HILLS WAY, STEVENAGE, HERTS. SG1 2AY, UK, vol. 9, no. 8, 1 November 2015 (2015-11-01), pages 1033-1042, XP006054236, ISSN: 1752-1416, DOI: 10.1049/IET-RPG.2014.0190 * paragraph [03.3]; figure 7 * ----- | 4,5 | |
| Y | CN 118 028 900 A (UNIV WUYI) 14 May 2024 (2024-05-14) * figure 1 * ----- | 10 | |
| | | | **TECHNICAL FIELDS SEARCHED (IPC)** |

The present search report has been drawn up for all claims

| Place of search | Date of completion of the search | Examiner |
|---|---|---|
| Munich | 25 January 2025 | Maucher, Bastian |

EPO FORM 1503 03.82 (P04C01)

page 2 of 2

**EP 4 704 283 A1**

## ANNEX TO THE EUROPEAN SEARCH REPORT
## ON EUROPEAN PATENT APPLICATION NO.

EP 24 19 6991

This annex lists the patent family members relating to the patent documents cited in  the above-mentioned European search report.
The members are as contained in the European Patent Office EDP file on
The European Patent Office is in no way liable for these particulars which are merely given for the purpose of information.

25-01-2025

| Patent document cited in search report | | Publication date | Patent family member(s) | | Publication date |
|---|---|---|---|---|---|
| US 2021363651 | A1 | 25-11-2021 | EP | 3811484 A1 | 28-04-2021 |
| | | | US | 2021363651 A1 | 25-11-2021 |
| | | | WO | 2019246433 A1 | 26-12-2019 |
| CN 116683751 | A | 01-09-2023 | NONE | | |
| US 5572138 | A | 05-11-1996 | DE | 69413067 T2 | 29-04-1999 |
| | | | EP | 0738433 A1 | 23-10-1996 |
| | | | US | 5572138 A | 05-11-1996 |
| | | | WO | 9519060 A1 | 13-07-1995 |
| CN 118028900 | A | 14-05-2024 | NONE | | |

EPO FORM P0459

For more details about this annex : see Official Journal of the European Patent Office, No. 12/82